# EUROPÄISCHE PATENTSCHRIFT

(11) **EP 3 038 828 B1**
(45) Veröffentlichungstag und Bekanntmachung des Hinweises auf die Patenterteilung: **11.09.2019**
(21) Anmeldenummer: 14736409.5
(22) Anmeldetag: 09.07.2014
(51) Int. Cl.: B32B 27/06, B32B 27/16, B32B 27/22, B32B 27/26, B32B 27/30, C08J 7/12, C08J 7/18, C08L 27/06, B32B 5/18, B32B 3/30

(54) **MEHRSCHICHTIGES FLÄCHENGEBILDE UND VERFAHREN ZU SEINER HERSTELLUNG**
MULTI-LAYER SHEET MATERIAL AND METHOD FOR THE PRODUCTION THEREOF
STRUCTURE PLANE MULTICOUCHES ET SON PROCÉDÉ DE FABRICATION

(30) Priorität: 29.08.2013 DE 102013109408
(43) Veröffentlichungstag der Anmeldung: 06.07.2016
(73) Patentinhaber: Benecke-Kaliko AG, 30419 Hannover (DE)
(72) Erfinder: MIELKE, Dirk, 30966 Hemmingen (DE); FREUDENMANN, Roland, 30900 Wedemark (DE); VAN WELL, Michael, 30826 Garbsen (DE); BÜHRING, Jürgen, 30900 Wedemark (DE)
(74) Vertreter: Preusser, Andrea
(86) Internationale Anmeldenummer: PCT/EP2014/064662
(87) Internationale Veröffentlichungsnummer: WO 2015/028183

(56) Entgegenhaltungen:
- EP-A1- 0 053 190
- WO-A1-96/26987
- CN-A- 101 864 124
- CN-A- 102 358 794
- GB-A- 2 061 809
- JP-A- S5 188 582
- JP-A- S53 138 450
- JP-A- S54 139 223

## Beschreibung

Die Erfindung betrifft ein mehrschichtiges Flächengebilde, welches zumindest eine Deckschicht aus weichmacherhaltigem Polyvinylchlorid, und zumindest eine nach außen weisende Lackschicht auf der Deckschicht enthält. Die Erfindung betrifft ferner ein Verfahren zur Herstellung des mehrschichtigen Flächengebildes sowie ein aus einem Flächengebilde bestehendes Innenverkleidungsteil für ein Fahrzeug.

Flächengebilde aus weichmacherhaltigem Polyvinylchlorid (PVC) mit darunterliegenden weiteren Polymerschichten die oft geschäumt sind. sind für die Innenverkleidung von Kraftfahrzeugen als Oberflächen für Instrumententafeln, Türseitenverkleidungen, Säulenverkleidungen etc. bereits bekannt. Die Flächengebilde besitzen üblicherweise einen mehrschichtigen Aufbau, sind oft hinterschäumt oder auf Bauteile kaschiert und weisen auf ihrer Oberseite eine dreidimensional strukturierte, geprägte Oberfläche auf, nämlich eine so genannte Musterung oder Narbung in verschiedensten Formen und Ausführungen. Der mehrschichtige Aufbau besteht oft aus einer oberen ggf. lackierten Deck- oder Dekorschicht, die geprägt ist, ggf. einer geschäumten Schicht und ggf. einem rückseitigem Primer. Der Primer dient zur besseren Verklebung oder Schaumhaftung zum Träger. Derartige Flächengebilde sind beispielsweise aus WO2011091878A1 bekannt. Insbesondere zur Verwendung der Flächengebilde als Innenverkleidung von Kraftfahrzeugen werden die genarbten Flächengebilde tiefgezogen. Das Tiefziehen führt allerdings zu einem Verzug der genarbten Oberfläche, welcher vor allem in Bereichen mit hohen Auszugsgraden unerwünscht ist. Für Flächengebilde, welche im Wesentlichen Polyolefine enthalten, ist es u.a. bereits aus EP1149858B1 bekannt, dass sich ein Verzug reduzieren lässt, wenn das polyolefinhaltige Flächengebilde strahlenvernetzt wird. Für PVC-haltige dekorative Flächengebilde war die Strahlenvernetzung bisher nicht anwendbar, da hierbei die Nebenreaktion zur Vernetzung zu einem Abbau des PVC führt, wodurch wiederum störende Farbveränderungen erfolgen. Eine Verbesserung der Tiefziehfähigkeit von Flächengebilden, welche eine PVC-Schaumschicht enthalten oder welche aus einem Laminat aus einer PVC-Schicht und wenigstens einer weiteren Schicht, z. Bsp. aus Polypropylen oder Polyethylen darstellen, war bisher somit nicht möglich.

JPS54139223A offenbart ein mehrschichtiges Flächengebilde, aufweisend zumindest einen Schichtträger, eine Zwischenschicht aus Vinylchlorid, und eine Deckschicht aus weichmacherhaltigem Polyvinylchlorid und Barium-Zink als Stabilisator, die strahlenvernetzt ist.

Der vorliegenden Erfindung liegt daher die Aufgabe zu Grunde, ein mehrschichtiges Flächengebilde mit Schichten aus weichmacherhaltigem Polyvinylchlorid der eingangs genannten Art bereit zu stellen, welches den Zielkonflikt zwischen Narbverzug der Oberfläche beim Tiefziehen und Verfärbung der Oberfläche des Flächengebildes löst. Gelöst wird die Aufgabe erfindungsgemäß dadurch, dass die Deckschicht des mehrschichtigen Flächengebildes mindestens 50 Gew.-% wenigstens eines Polyvinylchlorids und 0 bis 15 Gew. -% wenigstens eines Vernetzungshilfsmittels, welches zur Strahlenvernetzung geeignet ist, und einen Calciumhydroxid-Stabilisator und / oder einen Ca/Zn-Stabilisator, der 0,5 bis 10 Gew.-% Calcium und 0,5 bis 10 Gew.-% Zink aufweist, enthält und dass das mehrschichtige Flächengebilde strahlenvernetzt ist.

Überraschenderweise hat sich gezeigt, dass sich durch die Kombination von Vernetzungshilfsmittel zur Strahlenvernetzung, der Strahlenvernetzung und Calciumhydroxid-Stabilisator und / oder Ca/Zn-Stabilisator für ein mehrschichtiges Flächengebilde, welches im Wesentlichen als Deckschicht PVC enthält, eine deutliche Optimierung des Narbverzugs erzielen lässt, bei gleichzeitig geringer ausgeprägter Neigung zum Verfärben.

Das mehrschichtige Flächengebilde kann wenigstens eine zusätzliche Schicht auf der Basis von Polyvinylchlorid und / oder wenigstens eines thermoplastischen Polyolefins (TPO) enthalten. Diese zusätzliche Schicht ist in einer bevorzugten Ausführungsform eine geschäumt, d.h. eine Schaumschicht.

Als Polymer wird erfindungsgemäß PVC in der Deckschicht in Mengen von mindestens 50 Gew. -% eingesetzt. Das Polyvinylchlorid kann hierbei bevorzugt als S-PVC, welches technisch durch Suspensionspolymerisation hergestellt wird, oder als E-PVC, welches technisch durch Emulsionspolymerisation hergestellt wird, oder als M-PVC, welches mittels Substanzpolymerisation bzw. Massepolymerisation hergestellt wird, oder als MS-PVC, welches im Mikrosuspensionsverhahren hergestellt wird, vorliegen. Die so erhaltenen Polyvinylchloride werden durch Extrudieren, Kalandrieren, Streichen, Blasformen, Spritzgießen, Pressen oder Sintern verarbeitet und zwar mit Gehalten an Weichmachern von 0 bis 12 % (Hart-PVC, Kurzzeichen PVC-U für weichmacherfreies PVC), >12 % (Weich-PVC, Kurzzeichen PVC-P, plastifiziertes PVC, PPVC) bzw. sehr hohem Weichmachergehalt (Plastisole, PVC-Paste). Ebenso kann bspw. auch nachchloriertes PVC PVC-C, PVCC) mit einem Chlor-Gehalt von bis zu 73 %, verwendet werden. PVC-C ist aufgrund der gesteigerten Löslichkeit besonders chemikalienbeständig und gleichzeitig sehr gut thermisch stabil. Ebenso sind Copolymerisate des Vinylchlorids (VC) geeignet, wie zum Beispiel Copolymere aus VC und 2 bis 15 % Vinylacetat (VC/VAC), VC und 14 % Vinylacetat und 1 % Maleinsäure, VC und 12 bis 20 % Vinylidenchlorid und 1 % Acrylnitril, sowie VC/E (Vinylchlorid-Ethylen), VC/E/MA (Vinylchlorid-Ethylen-Methylacrylat), VC/E/VAC (Vinylchlorid-Ethylen-Vinylacetat), VC/MA (Vinylchlorid-Methylacrylat), VC/MMA (Vinylchlorid-Methylmethacrylat), VC/OA (Vinylchlorid-Octylacrylat), VC/VAC (Vinylchlorid-Vinylacetat) und VC/VDC (Vinylchlorid-Vinylidenchlorid).

Die Deckschicht des mehrschichtigen Flächengebildes kann wenigstens eines weiteren Kunststoffs enthalten, der nicht PVC ist. Hierbei können alle der fachkundigen Person bekannten Kunststoffe verwendet werden, wobei die Zusammensetzung nach der Art der Anwendung des mehrschichtigen Flächengebildes und vor allem der Viskosität ausgewählt wird. Es kann sich hierbei bspw. um ABS (AcrylnitrilButadien-Styrol-Copolymere), AMMA Acrylnitril-Methylmethacrylat, CA vor allem der Viskosität ausgewählt wird. Es kann sich hierbei bspw. um ABS (AcrylnitrilButadien-Styrol-Copolymere), AMMA Acrylnitril-Methylmethacrylat, CA (Celluloseacetat), CAB (Celluloseacetobutyrat), CF (Kresol-Formaldehydharze ,Kresolharze), CMC (Carboxymethylcellulose), CSF (Casein-Kunststoffe), DAP (Diallylphthalat), EC (Ethylcellulose), EP (Epoxidharze), EPS (expandierbares Polystyrol), EVA (Ethylen-Vinylacetat-Copolymere), EVAL(Ethylen-Vinylalkohol-Copolymere), FEP (Perfluorethylenpropylen), MBS (Methylmethacrylat/Butadien/Styrol-Copolymere), MC (Methylcellulose), MF (Melamin-Formaldehyd-Harze), PA (Polyamide), PA 6 (Poly(ε-caprolactam)e), PA 66 (Polykondensat aus Hexan-1,6-diamin und Adipinsäure), PAN (Polyacrylnitrile), PB (Polybutene), PBTP (Polybutylenterephthalate), PC (Polycarbonate), PCTFE (Poly(chlortrifluorethylen)e), PE (Polyethylene), PEC (chloriertes Polyethylen), PE-HD (Polyethylen hoher Dichte), PE-LD (Polyethylen niederer Dichte), PEP (Ethylen-Propylen-Copolymere), PETP (Polyethylenterephthalate), PF (Phenolharze), PI (Polyimide), PIB (Polyisobutene), PMMA (Polymethylmethacrylat), POM (Polyoxymethylene), PP (Polypropylene), PPO (Polyphenylenoxide), PPS (Polyphenylensulfide), PS (Polystyrol), PTFE (Polytetrafluorethylene), PUR (Polyurethane), PVAC (Polyvinylacetate), PVAL (Polyvinylalkohole), PVDC (Polyvinylidenchloride), PVDF (Polyvinylidenfluoride), PVK (Polyvinylcarbazole), PVP (Polyvinylpyrrolidone), SAN (Styrol-Acrylnitril-Copolymere), SB (Styrol-Butadien-Copolymere), SI (Poly(dimethylsiloxane)), SMS (Copolymere aus Styrol und α-Methylstyrol), UF (Harnstoff-Formaldehyd-Harze), UP (ungesättigte Polyester) handeln.

Die PVC-Anteil der Zusammensetzung für die Deckschicht basiert somit bevorzugt zu zumindest 50 Gew.-% auf E-PVC und / oder MS-PVC, der restliche PVC-Anteil kann durch S-PVC gebildet werden. Vorzugsweise basiert der PVC-Anteil der Deckschicht jedoch zu zumindest 75 Gew.-%, besonders bevorzugt zu zumindest 95 Gew.-% auf E-PVC und / oder MS-PVC, dadurch ergeben sich verarbeitungstechnische Vorteile beim Streichen bzw. Kalandrieren der Deckschicht und Vorteile in der Wärmestabilität. Als Stabilisatoren enthält die Deckschicht wenigstens einen Calciumhydroxid-Stabilisator und/oder wenigstens einen speziellen Ca/Zn-Stabilisator. Bei dem Ca/Zn-Stabilisator handelt es sich um einen Metallseifen-Stabilisator. der 0,5 bis 10 Gew.% Calcium und 0,5 bis 10 Gew. % Zink, bevorzugt 0,5 bis 5 Gew. % Calcium und 0,5 bis 5 Gew.% Zink und besonders bevorzugt 1 bis 3 Gew.-% Calcium und 1 bis 2 Gew.-% Zink aufweist. Zur weiteren Farbbeständigkeit hat sich die Verwendung von wenigstens einem Perchlorat als weiteren Stabilisator erwiesen. Hierbei können alle der fachkundigen Person bekannten Perchlorate verwendet werden, besonders geeignet ist Natriumperchlorat.

Enthält die Zusammensetzung für die Deckschicht den Ca/Zn-Stabilisator, beträgt das Gewichtsverhältnis von Calcium plus Zink aus dem Ca/Zn-Stabilisator zu Perchlorat in der Zusammensetzung für die Deckschicht gemäß einer vorteilhaften Ausgestaltung der Erfindung 1:0,5 bis 1:10, vorzugsweise 1:1 bis 1:6. Bei Unterschreitung dieser Verhältnisse wird die Aminbeständigkeit schlechter und ist eine stärkere Verfärbung bei Wärmelagerung zu beobachten. Zu hohe Mengen an Stabilisator verteuern das Flächengebilde ohne zusätzlichen Nutzen und führen teilweise zu einer Verschlechterung der Wärmestabilität.

Enthält die Zusammensetzung für die Deckschicht Calciumhydroxid als Stabilisator, beträgt das Gewichtsverhältnis von Calciumhydroxid-Stabilisator, also Ca(OH)₂ zu Perchlorat in der Zusammensetzung für die Deckschicht 20:1 bis 1:1, vorzugsweise 8:1 bis 14:1.

Neben den genannten Stabilisatoren kann die Zusammensetzung für die Deckschicht noch weitere PVC-Stabilisatoren, wie sie dem Fachmann bekannt sind, in üblichen Mengen enthalten. Zu diesen Stabilisatoren zählen CH-acide Verbindungen (wie β-Diketone, Dihydropyridine, Acetylacetonate), Antioxidantien (wie gehinderte Phenole, sterisch gehinderte Amine), Polyole, Hydrotalcite, Zeolithe oder organische Stabilisatoren.

Die in den Flächengebilden vorliegenden PVC-Schichten enthalten neben Weichmacher und Stabilisatoren die üblichen Additive wie z. B. Alterungsschutzmittel (z. B. Antioxidantien), Füllstoffe, Flammschutzmittel (z. B. Antimontrioxid), Treibmittel (z. B. Azodicarbonamid), Pigmente (z. B. Ruß, Titandioxid) und weitere Hilfssubstanzen (z. B. Viskositätshilfsmittel, Haftvermittler etc.).

Weiterhin weist das mehrschichtige Flächengebilde eine Lackschicht auf, die nach außen weisend auf die Deckschicht aufgebracht ist. Als Lacke können solche verwendet werden, die auf Basis von Polyurethan (PU bzw. PUR), PVC/Acrylat, Acrylat verwendet werden wie sie von Dr. Iben bei der SKZ Pastentagung in Würzburg am 27.09.2001 vorgestellt wurden. Auch die Arten der Aufbringung wurden dort beschrieben. Das mehrschichtige Flächengebilde weist vorzugsweise eine Polyurethan und/oder Polyvinylchlorid/Acrylat enthaltende Lackschicht auf. Diese Lackschicht sorgt dafür, dass die Abriebseigenschaften verbessert werden und eine hohe Sonnenmilchbeständigkeit erzielt wird. Weiterhin können mit diesen Lacken Anti-Knarz Eigenschaften eingestellt werden. Besonders vorteilhaft sind Lacke auf Dispersionsbasis, also auf Wasserbasis, um die niedrigen Emissionsvorgaben nach VDA 278 mit VOC ≤ 100 ppm zu erfüllen.

Erfindungswesentlich, insbesondere im Hinblick auf die Verringerung des Narbverzuges, ist es, dass die Deckschicht 0 bis 15 Gew. -% wenigstens eines Vernetzungshilfsmittels enthält, welches zur Strahlenvernetzung geeignet ist, und dass das mehrschichtige Flächengebilde strahlenvernetzt ist. Die Verringerung des Narbverzuges lässt sich auch schon beobachten, wenn die Menge der Strahlenvernetzungshilfsmittel sehr gering, d.h. 0,1 bis 1 Gew. -%, oder 0 Gew.-% beträgt. Bevorzugt beträgt die Menge an Strahlen Vernetzungshilfsmittel 0,1 bis 15 Gew. -%, besonders bevorzugt 1 bis 5 Gew. -%. Als Strahlenvernetzungshilfsmittel können alle der fachkundigen Person bekannten Strahlen Vernetzungshilfsmittel verwendet werden. Besonders vorteilhaft ist es, wenn das Strahlen Vernetzungshilfsmittel ausgewählt ist aus der Gruppe, enthaltend Trimethylolpropan-Trimethacrylat (TMPTMA) und / oder Trimethylolpropantriacrylat TMPTA und / oder Triallylisocyanurat (TAIC) und / oder Pentaerythritoltetraacrylat bzw. Pentaerythritoltriacrylat (PETA) und / oder Pentaerythrityltriallyl- ether (PETAE) und / oder hochethoxyliertes Trimethylpropantriacrylat und / oder aliphatisches Urethanacrylat und / oder hexafuntionelles aliphatisches Urethanacrylat und / oder Polyesterharz mit 40 % Hexandioldiacrylat und / oder epoxidiertes Sojaöl-Acrylat und / oder Poleyesteracrylate, insbesondere Polyestertetra-acrylat. Ganz besonders vorteilhaft ist hierbei allerdings die Verwendung von TMPTMA und / oder TMPTA.

Wie bereits oben erwähnt, ist es ebenso wichtig, dass das mehrschichtige Flächengebilde strahlenvernetzt ist. Die Strahlenvernetzung führt dazu, dass zwischen den langen Makromolekülketten bei thermoplastischen Kunststoffen eine Verbindung hergestellt wird. Dies geschieht dadurch, dass die Energie der eingesetzten Strahlung im Kunststoff absorbiert wird und sich Radikale bilden, die wiederum über eine chemische Reaktion die Verbindung zwischen den Molekülketten herstellen. Diese Vernetzung bindet die Moleküle aneinander und schränkt deren Beweglichkeit stark ein. Der Kunststoff wird so in einen duroplastischen bzw. thermoelastischen Zustand überführt. Er bleibt auch bei erhöhter Wärmezufuhr weitgehend formstabil und kann nicht mehr schmelzen.

Der Grad der Vernetzung kann hierbei über die eingebrachte Energie gesteuert werden. Hierzu können Elektronenbeschleuniger unterschiedlicher Leistung (Elektronenstrahlen bzw. Betastrahlen) oder auch Kobalt-60-Quellen (Gammastrahlen) verwendet werden, wobei aus physikalischen Gründen durch die ionisierende Strahlung in Kunststoffen keine Radioaktivität erzeugt werden kann.

Vorteilhaft zur Vernetzung des erfindungsgemäßen mehrschichtigen Flächengebildes ist die Verwendung von Elektronenstrahlen. Mit Elektronenbeschleunigern kann mit hohen Dosisleistungen gearbeitet werden, aber mit einer von der Energie abhängigen beschränkten Eindringtiefe, was in der Summe zu einer kürzeren Bestrahlungsdauer führt. Gammastrahlen besitzen hingegen eine hohe Durchdringungsfähigkeit bei einer relativ geringen Dosisleistung, so dass hier für großflächige Anwendungen meist mehrere Stunden Bestrahlungsdauer notwendig sind.

Es hat sich zur Reduzierung des Narbverzugs bei gleichzeitig reduzierter Verfärbung der Oberfläche als vorteilhaft erwiesen, wenn der Gesamt-Energieeintrag zwischen 10 und 100 kGy, bevorzugt zwischen 30 und 50 kGy liegt. 1 Gy entspricht hierbei 1 J/kg. Bei mehr als 100 kGy treten Verfärbungen auf, die insbesondere bei hellen mehrschichtigen Flächengebilden kundenseitig inakzeptabel sind. Bei einem Energieeintrag zwischen 30 und 50 kGy wird die optimale Lösung des Zielkonfliktes zwischen Verfärbung und Narbverzug erzielt. Der Gesamt-Energieeintrag kann hierbei in einem oder mehreren Bestrahlungsdurchgängen (Bestrahlungszyklen) erfolgen.

Bevorzugt hat das mehrschichtige Flächengebilde einen Gelgehalt, gemessen nach 24-stündiger Extraktion in siedendem Xylol, von 10 bis 70 Gew. %, bevorzugt von 20 bis 70% und besonders bevorzugt von 30 bis 60 Gew. %.

Besonders vorteilhaft lässt sich das erfindungsgemäße Flächengebilde als Innenverkleidungsteil für ein Fahrzeug verwenden, insbesondere für Armaturentafeln, Türverkleidungen, Mittelkonsolen, Hutablagen, Sitzrückwände, Säulenverkleidungen und Armauflagen.

Eine weitere Aufgabe der vorliegenden Erfindung ist es, ein Verfahren zur Herstellung eines mehrschichtigen Flächengebildes mit geringer Verfärbung und gleichzeitig reduziertem Narbverzug bereitzustellen.

Diese Aufgabe wird durch wenigstens folgende Verfahrensschritte gelöst:
In einem ersten Verfahrensschritt erfolgt die Herstellung der Deckschicht aus weichmacherhaltigem Polyvinylchlorid mittels eines Kalandrier-, Streich- oder eines Extrudierverfahrens. In wenigstens einem weiteren Verfahrensschritt erfolgt die Herstellung weiterer Schichten des mehrschichtigen Flächengebildes, anschließend werden in wenigstens einem weiteren Verfahrensschritt die Deckschicht und die weiteren Schichten des mehrschichtigen Flächengebildes zusammengeführt, wobei nach dem Zusammenführen in wenigstens einem weiteren Verfahrensschritt eine Lackierung und Prägung der Außenoberfläche der Deckschicht stattfindet. Anschließend erfolgt die Strahlenvernetzung des mehrschichtigen Flächengebildes mittels Elektronenbestrahlung in einem letzten Verfahrensschritt.

In zwei Anwendungsbeispielen wurde eine PVC Laminat mittels Strahlenvernetzung mit 30 und 50 kGy teilweise vernetzt. Der Gelgehalt der PVC-Deckschicht betrug: 38 Gew.-% bzw. 46 Gew. -%. Der Gelgehalt gibt hierbei den Vernetzungsgrad an. Die Verfärbung nach zweiwöchiger Alterung bei einer Temperatur von 120°C ist gering und wurde bestimmt nach DIN EN ISO 105/A02 mit GS (Graustufe) ≥ 4,0 (bei heller Farbe z.B. hellgrau wurde GS 4,0 gemessen. , mit dunkleren Farben sind höhere Werte erreichbar. Eine Strahlendosis von 100 kGy zeigt eine Verfärbung durch die Abbaureaktionen des PVC, hierbei ist GS gleich 3,0 bei einer hellen Farbgebung, während der Gelgehalt bei 48 Gew. -% lag. Der maximal zu erzielende Gelgehalt einer PVC-Rezeptur beträgt 65 Gew. - %, unter der Annahme, dass das PVC und die vorhandenen Vernetzungshilfsmittel vollständig vernetzen, da etwaig vorhandene Weichmacher nicht vernetzen.

Hier zeigte sich, daß mit zunehmender Vernetzung der Narbverzug nach dem Tiefziehen abnimmt. Die Narbe wirkt im verstreckten Zustand prägnanter. Durch die Vernetzung wird die Polymerstruktur dreidimensional vernetzt. Beim Tiefziehen wird somit der Narbverzug besser über die Gesamtfläche verteilt.

Anwendungsrezeptur des PVC Deckstrichs:
100 phr PVC (S-PVC , E-PVC und MS-PVC)
59 phr Weichmacher (DIDP)
2 phr Stabilisierer (Ca/Zn)
3 phr Vernetzungshilfsmittel (TMPTMA)
1 bis 5 phr Pigmente

Der zusätzlich zu verwendende Schaum zur Ausgestaltung des mehrschichtigen Flächengebildes war im Anwendungsbeispiel ein 1,80 mm PP Schaum. Das Produkt war ein Laminat PVC/PP (Yorn® light).

## Patentansprüche

1. Mehrschichtiges Flächengebilde, aufweisend zumindest eine Deckschicht aus weichmacherhaltigem Polyvinylchlorid und zumindest eine nach außen weisende Lackschicht auf der Deckschicht, **dadurch gekennzeichnet, dass** die Deckschicht des mehrschichtigen Flächengebildes mindestens 50 Gew.- % wenigstens eines Polyvinylchlorids und 0 bis 15 Gew. -% wenigstens eines Vernetzungshilfsmittels, welches zur Strahlenvernetzung geeignet ist, und einen Calciumhydroxid-Stabilisator und / oder einen Ca/Zn-Stabilisator, der 0,5 bis 10 Gew.-% Calcium und 0,5 bis 10 Gew.-% Zink aufweist, enthält und dass das mehrschichtige Flächengebilde strahlenvernetzt ist.

2. Mehrschichtiges Flächengebilde nach Anspruch 1, **dadurch gekennzeichnet, dass** der Polyvinylchlorid-Anteil in der Deckschicht auf emulsionspolymerisiertem Polyvinylchlorid (E-PVC) und / oder auf durch mikrosuspensionsverfahren hergestelltem Polyvinylchlorid (MS-PVC) basiert.

3. Mehrschichtiges Flächengebilde nach Anspruch 1 oder 2, **dadurch gekennzeichnet, dass** die Menge an Vernetzungshilfsmittel 0,1 bis 10 Gew. -% beträgt.

4. Mehrschichtiges Flächengebilde nach einem der Ansprüche 1 bis 3, **dadurch gekennzeichnet, dass** das Vernetzungshilfsmittel Trimethylpropan-Trimethacrylat (TMPTMA) und / oder Trimethylolpropantriacrylat (TMPTA) ist.

5. Mehrschichtiges Flächengebilde nach einem der Ansprüche 1 bis 4, **dadurch gekennzeichnet, dass** es wenigstens eine zusätzliche Schicht auf Basis von Polyvinylchlorid (PVC) und / oder thermoplastischem Polyolefin (TPO) enthält.

6. Mehrschichtiges Flächengebilde nach Anspruch 5, **dadurch gekennzeichnet, dass** die zusätzliche Schicht geschäumt ist.

7. Mehrschichtiges Flächengebilde nach zumindest einem der Ansprüche 1 bis 6, **dadurch gekennzeichnet, dass** es ein Innenverkleidungsteil für ein Fahrzeug ist.

8. Innenverkleidungsteil für ein Fahrzeug, bestehend aus einem mehrschichtigen Flächengebilde nach einem der Ansprüche 1 bis 6.

9. Verfahren zur Herstellung eines mehrschichtigen Flächengebildes nach einem der Ansprüche 1 bis 7, **gekennzeichnet durch** wenigstens folgende Verfahrensschritte:
- Herstellung der Deckschicht aus weichmacherhaltigem Polyvinylchlorid mittels eines Streich-, Kalandrier- oder eines Extrudierverfahrens in einem ersten Verfahrensschritt;
- Herstellung weiterer Schichten des mehrschichtigen Flächengebildes in wenigstens einem weiteren Verfahrensschritt;
- Zusammenführen der Deckschicht und der weiteren Schichten des mehrschichtigen Flächengebildes in wenigstens einem weiteren Verfahrensschritt;
- Lackierung und Prägung der Außenoberfläche der Deckschicht in wenigstens einem weiteren Verfahrensschritt;
- Strahlenvernetzung des mehrschichtigen Flächengebildes mittels Elektronenbestrahlung in einem letzten Verfahrensschritt.

10. Verfahren zur Herstellung eines mehrschichtigen Flächengebildes nach Anspruch 9, **dadurch gekennzeichnet, dass** die Elektronenbestrahlung des letzten Verfahrensschrittes bei einer Energie zwischen 10 und 100 kGy durchgeführt wird.

## Claims

1. Multi-layer sheet material having at least one topcoat layer of plasticized polyvinyl chloride and at least one outwardly facing layer of lacquer on the topcoat layer, **characterized in that** the topcoat layer of the multi-layer sheet material contains at least 50 wt% of at least one polyvinyl chloride and from 0 to 15 wt% of at least one crosslinking assistant suitable for radiative crosslinking and a calcium hydroxide stabilizer and/or a Ca/Zn stabilizer having from 0.5 to 10 wt% of calcium and from 0.5 to 10 wt% of zinc, and **in that** the multi-layer sheet material is radiatively crosslinked.

2. Multi-layer sheet material according to Claim 1, **characterized in that** the polyvinyl chloride fraction in the topcoat layer is based on emulsion-polymerized polyvinyl chloride (E-PVC) and/or on polyvinyl chloride produced by microsuspension methods (MS-PVC).

3. Multi-layer sheet material according to Claim 1 or 2, **characterized in that** the amount of crosslinking assistant is in the range from 0.1 to 10 wt%.

4. Multi-layer sheet material according to any of Claims 1 to 3, **characterized in that** the crosslinking assistant is trimethylpropane trimethacrylate (TMPTMA) and/or trimethylolpropane triacrylate (TMPTA).

5. Multi-layer sheet material according to any of Claims 1 to 4, **characterized in that** it contains at least one additional layer based on polyvinyl chloride (PVC) and/or thermoplastic polyolefin (TPO).

6. Multi-layer sheet material according to Claim 5, **characterized in that** the additional layer is foamed.

7. Multi-layer sheet material according to at least one of Claims 1 to 6, **characterized in that** it is an interior trim component for a vehicle.

8. Interior trim component for a vehicle, consisting of a multi-layer sheet material according to any of Claims 1 to 6.

9. Method of producing the multi-layer sheet material according to any of Claims 1 to 7, **characterized by** at least the following steps:
- producing the topcoat layer of plasticized polyvinyl chloride by a spread coating, calendering or extrusion process in a first step;
- producing further layers of the multi-layer sheet material in at least one further step;
- combining the topcoat and further layers of the multi-layer sheet material in at least one further step;
- lacquering and embossing the external surface of the topcoat layer in at least one further step;
- radiatively crosslinking the multi-layer sheet material by electron beam irradiation in a last step.

10. Method of producing a multi-layer sheet material according to Claim 9, **characterized in that** the electron beam irradiation of the last step is effected at an energy between 10 and 100 kGy.

## Revendications

1. Structure plate multicouche, comprenant au moins une couche de recouvrement en un polychlorure de vinyle contenant un plastifiant et au moins une couche de vernis orientée vers l'extérieur sur la couche de recouvrement, **caractérisée en ce que** la couche de recouvrement de la structure plate multicouche contient au moins 50 % en poids d'au moins un polychlorure de vinyle et 0 à 15 % en poids d'au moins un adjuvant de réticulation, qui est approprié pour la réticulation par rayonnements, et un stabilisateur hydroxyde de calcium et/ou un stabilisateur Ca/Zn, qui comprend 0,5 à 10 % en poids de calcium et 0,5 à 10 % en poids de zinc, et **en ce que** la structure plate multicouche est réticulée par rayonnements.

2. Structure plate multicouche selon la revendication 1, **caractérisée en ce que** la fraction de polychlorure de vinyle dans la couche de recouvrement est à base d'un polychlorure de vinyle polymérisé en émulsion (E-PVC) et/ou à base d'un polychlorure de vinyle fabriqué par un procédé en microsuspension (MS-PVC).

3. Structure plate multicouche selon la revendication 1 ou 2, **caractérisée en ce que** la quantité d'adjuvant de réticulation est de 0,1 à 10 % en poids.

4. Structure plate multicouche selon l'une quelconque des revendications 1 à 3, **caractérisée en ce que** l'adjuvant de réticulation est le triméthacrylate de triméthylpropane (TMPTMA) et/ou le triacrylate de triméthylolpropane (TMPTA).

5. Structure plate multicouche selon l'une quelconque des revendications 1 à 4, **caractérisée en ce qu'elle** contient au moins une couche supplémentaire à base de polychlorure de vinyle (PVC) et/ou de polyoléfine thermoplastique (TPO).

6. Structure plate multicouche selon la revendication 5, **caractérisée en ce que** la couche supplémentaire est moussée.

7. Structure plate multicouche selon au moins l'une quelconque des revendications 1 à 6, **caractérisée en ce qu'**il s'agit d'une partie d'habillage intérieur pour un véhicule.

8. Partie d'habillage intérieur pour un véhicule, constituée par une structure plate multicouche selon l'une quelconque des revendications 1 à 6.

9. Procédé de fabrication d'une structure plate multicouche selon l'une quelconque des revendications 1 à 7, **caractérisé par** au moins les étapes de procédé suivantes :
- la fabrication de la couche de recouvrement à partir d'un polychlorure de vinyle contenant un plastifiant par un procédé d'enduction, de calandrage ou d'extrusion lors d'une première étape de procédé ;
- la fabrication de couches supplémentaires de la structure plate multicouche lors d'au moins une étape de procédé supplémentaire ;
- l'assemblage de la couche de recouvrement et des couches supplémentaires de la structure plate multicouche lors d'au moins une étape de procédé supplémentaire ;
- le vernissage et le gaufrage de la surface extérieure de la couche de recouvrement lors d'au moins une étape de procédé supplémentaire ;
- la réticulation par rayonnements de la structure plate multicouche au moyen d'une exposition à un faisceau d'électrons lors d'une dernière étape de procédé.

10. Procédé de fabrication d'une structure plate multicouche selon la revendication 9, **caractérisé en ce que** l'exposition à un faisceau d'électrons de la dernière étape de procédé est réalisée à une énergie comprise entre 10 et 100 kGy.
